Europäisches Patentamt

European Patent Office

Office européen des brevets

(19)

(11) Publication number: **0 353 076**
**A2**

(12)
# EUROPEAN PATENT APPLICATION

(21) Application number: **89307669.5**

(22) Date of filing: **27.07.89**

(51) Int. Cl.⁵: **G 01 D 5/246**

(30) Priority: **29.07.88 GB 8818155**

(43) Date of publication of application:
**31.01.90 Bulletin 90/05**

(84) Designated Contracting States: **DE FR GB**

(71) Applicant: **Dowty Rotol Ltd.**
**Cheltenham Road**
**Staverton Gloucester (GB)**

(72) Inventor: **Waddleton, David**
**390 Burnham Road**
**Oakview California, 93022 (US)**

**Goodburn, Simon John**
**Ashburn, Farm Lane**
**Shurdington Gloucestershire, GL51 5XN (GB)**

(74) Representative: **Chapple, Colin Richard et al**
**Dowty Group Services Ltd. Patents Dept. Arle Court**
**Cheltenham, Glos. GL51 0TP (GB)**

(54) **Assembly for determining the longitudinal displacement of a rotating shaft.**

(57) An assembly for determining the longitudinal displacement of a rotating shaft, which incorporates a shaft displacement detector comprises:
- a detector means;
and - at least one detectable section provided in relation to the shaft, and which can be detected by the detector means; wherein the detected property or properties of the detectable section vary dependent upon the longitudinal displacement of the shaft. The invention also includes a propeller blade assembly including an assembly in accordance with the present invention, and methods of operating the assembly and propeller blade assembly.

Fig.1.

EP 0 353 076 A2

Bundesdruckerei Berlin

**Description**

# ASSEMBLY FOR DETERMINING THE LONGITUDINAL DISPLACEMENT OF A ROTATING SHAFT

This invention relates to an assembly for determining the longitudinal displacement of a rotating shaft and, in particular the displacement of a beta tube in a beta valve assembly.

In accordance with the present invention, an assembly for determining the longitudinal displacement of a rotating shaft, which incorporates a shaft displacement detector comprises:
- a detector means;
and - at least one detectable section provided in relation to the shaft, and which can be detected by the detector means;
wherein the detected property or properties of the detectable section vary dependent upon the longitudinal displacement of the shaft.

Detector means which may be used in an assembly made in accordance with the present invention may operate by detecting any suitable effect induced by the detectable section. The detector means could be, for example, a close proximity detector, a magnetic pick-up detector, an optical detector, a laser operated detector, a magneto resistive detector, a capacitive detector or a hall effect detector.

In a particular embodiment of the invention it is envisaged that a close proximity detector will be used. Close proximity detectors work on the principle of the proximity effect, i.e. the increase in effective high-frequency resistance of a conductor when it is brought into close proximity with another conductor. This increase is primarily caused by the eddy currents induced. Therefore, as the rotating shaft is normally manufactured from a metallic material this proximity effect can be effectively utilised in accordance with the present invention.

Under normal operating conditions, the detector means will emit a signal at a continuous base level (zero). However, when the detectable sections pass by the detector means a change is caused in the signal level, either a transient or steady state change. The presence of the change in the signal level may be easily detected and utilised to render the necessary data.

In a preferred form of the invention, the or each of the detectable sections provided in relation to the shaft comprises two distinct components. A first component which provides a regular signal and is, preferably, formed parallel to the axis of rotation of the shaft. This means a regular beat signal will be generated.

The regularity of this signal is of course clearly dependent upon the speed of rotation of the shaft and the actual number of detectable sections provided in relation thereto.

A second component of the detectable section provides a second signal. However, the second component is longitudinally sloped, in relation to the first component, along the length of the shaft, so that the separation between the regular beat signal and the second signal varies dependent upon the longitudinal displacement of the shaft.

The analysis of the signals generated by the detector means may be performed, to provide the longitudinal displacement, using either of the following basic concepts:

(a) that the relative position of the second signal between two regular beat signal will be constant, no matter what the speed of rotation of the shaft, for a particular longitudinal position of the shaft;

or (b) in conjunction with the speed of rotation of the shaft, the direct time between the regular beat signal and the second signal, will provide the longitudinal position of the shaft.

The first of these analysis methods relies on the principle that although the time between signals, at a constant displacement, will vary as the speed of rotation of the shaft is adjusted, the proportion of time between the beat signal and the second signal and the second signal and the subsequent beat signal remains constant for a particular displacement of the shaft.

The second of the analysis methods relies on the direct time between the beat signal and the second signal relative to longitudinal position of the shaft principle, and for a particular rotational speed of the shaft.

The analysis of the data obtained from the detector means is, preferably, performed by a microprocessor.

The information so obtained may be simply displayed for information, or may be used to assist in the control and performance of associated apparatus.

The information obtained by the detector means may be slightly affected by the acceleration and deceleration of the shaft, as the operational characteristics of the associated apparatus is adjusted. However, where the speed of rotation of the shaft is relatively high in comparison to the speed changes, the speed change effect i.e. acceleration and deceleration, is negligible and may be ignored in relation to the operation of the assembly as a whole.

The detectable sections provided in relation to the shaft may utilise any suitable physical property to provide the required information. In a preferred embodiment of the invention the detectable sections comprise grooves or slots cut into the surface of, or through, the shaft.

In one of the preferred forms of the invention the first component comprises a longitudinally extending slot or groove cut into, or through, the shaft and running parallel to the axis of rotation thereof, and the second component comprises a second groove or slot cut into, or through, the shaft and running in longitudinally sloped relationship to the first component.

With this particular form of the invention, the signals generated by the slots/grooves will be pulses and it is the presence of these pulses generated by the first and second components which is being used to provide the data for analysis.

In a second preferred form of the invention, a single slot is cut into, or through, the shaft, the slot has a first side which acts as the first component and a second side, longitudinally sloped relative to the first side, which acts as the second component.

With this particular form of the invention, more detailed analysis of the signals generated by the detectable sections, in particular the relative components thereof, is necessary in order to obtain the necessary information.

The detectable section or sections may be provided at any convenient position along the length of the shaft.

In certain embodiments of the present invention it is also necessary to detect the speed of rotation of the shaft, to assist in analysis of the data. The speed of rotation of the shaft may be calculated by means of the regular beat signals.

This invention also includes a propeller blade assembly including a beta valve assembly which has a rotatable beta tube and which incorporates a displacement, and thereby propeller blade pitch, detector comprising:
- a detector means;
and - at least one detectable section provided in relation to the beta tube, and which can be detected by the detector means;
wherein the detected property or properties of the detectable section vary dependent upon the pitch of the propeller blades.

In this case for ease of maintenance/calibration preferably the detectable section or sections are provided at one end of the beta tube.

When the invention is incorporated in a propeller blade assembly made in accordance with the present invention, the beat signals of the detectable sections may be used to assist in the synchrophasing adjustment/phasing of the individual propeller blade assemblies.

In this case, the propeller blades of each propeller blade assembly would have to be physically aligned with the beta tube so that each assembly is substantially identically aligned.

Further, this invention also includes a method of detecting the longitudinal displacement of a rotating shaft which method comprises:
- providing a detector means;
- providing the shaft with detectable sections which can be detected by the detector means, and which have a first component and a second component which vary relative to one another dependent upon the longitudinal displacement;
- detecting the first component and the second component;
and - analysing the data obtained to ascertain the longitudinal displacement of the shaft.

In one particular method in accordance with the present invention, the method further includes detecting the speed of rotation of the shaft and using this in conjunction with the first and second component data to obtain the longitudinal displacement of the shaft.

When this method is used in conjunction with a propeller blade assembly having a rotating beta tube, the method comprises:
- providing a detector means;
- providing the beta tube of the beta valve assembly with detectable sections which can be detected by the detector means, and which vary relative to one another dependent upon the propeller blade pitch;
- detecting the first component and the second component;
and - analysing the data obtained to ascertain the propeller blade pitch.

The invention will now be illustrated by way of description of two examples of the present invention as shown in the accompanying drawings, in which:

Figure 1 shows a typical pulse profile generated by a magnetic pick up unit;

Figure 2 shows a first embodiment of apparatus made in accordance with the present invention;

Figure 2A shows a typical signal layout for the apparatus of Figure 2.

Figure 3 shows a second embodiment of the apparatus made in accordance with the present invention;

and Figure 3A shows a typical signal layout for the apparatus of Figure 3.

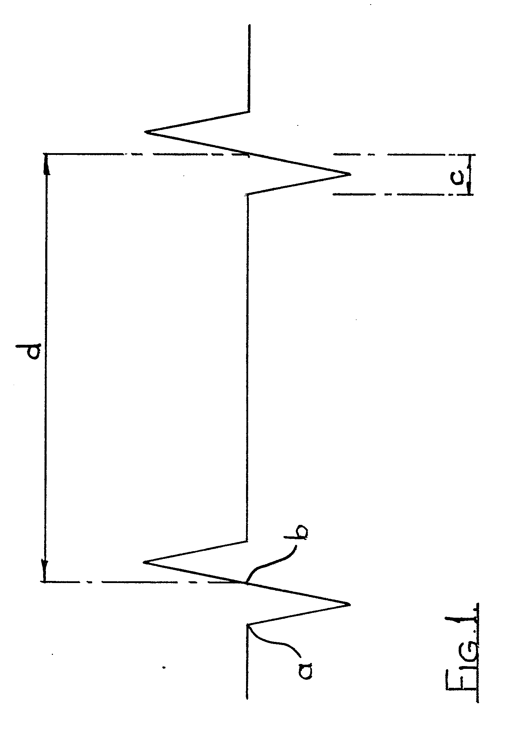

Now referring to Figure 1 of the drawings, a typical pulse shape characteristic is illustrated. The following data can be ascertained from the pulse generated by a magnetic pick up unit:

a - a change in signal level corresponding to the detector passing over a groove/slot leading edge,

b - a change in signal level corresponding to the detector passing over a groove/slot trailing edge,

c - duration of detector means travel over the slot/groove,

d - duration between regular beat signals.

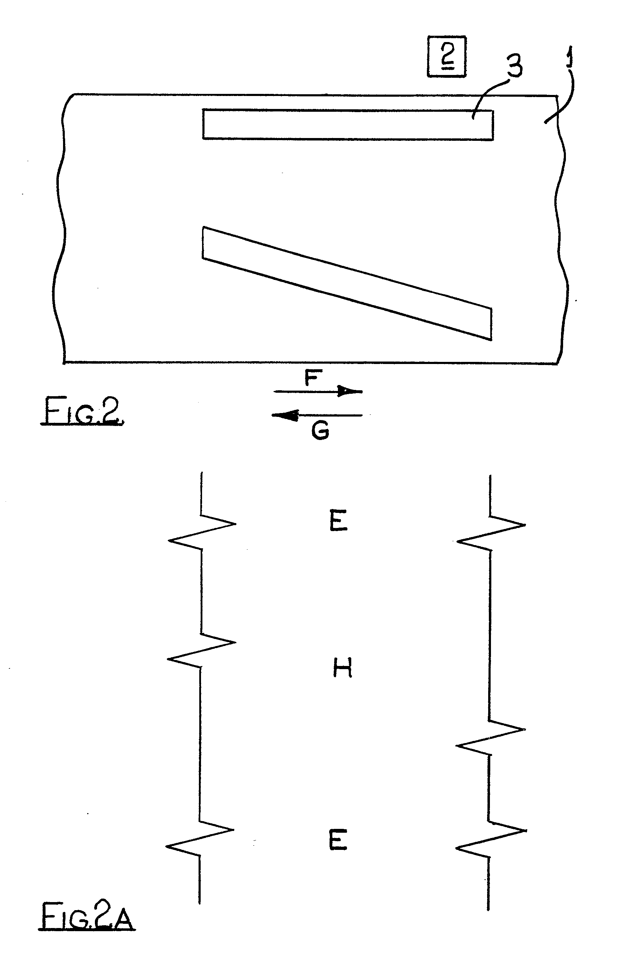

Now referring to Figure 2 of the drawings, a first embodiment of the invention suitable for use in a beta valve assembly (not shown) having a beta tube 1, and which may be incorporated in an aircraft propeller blade assembly is illustrated. In this Figure the beta tube 1 is shown as if cut and rolled out flat.

The beta tube 1 is provided with a magnetic pick up detector 2, which is positioned relative to the beta tube 1 so that it can detect the passage of two slots 3, 4 provided in the beta tube 1.

The two slots 3, 4 provided in the beta tube 1 act as the detectable section provided in relation to the beta tube 1.

The first slot 3 is formed substantially parallel to the axis of rotation of the beta tube 1, and forms a first component of the detectable section. The change in signal level generated in the magnetic pick up unit 2 by the passage of this slot provides the beta valve assembly with a regular beat signal E.

The second slot 4 is formed in a sloping relationship to the first slot 3 and forms a second component of the detectable section. The passage of the second slot 4 by the magnetic pick up unit 2 generates a second change in signal level H.

The typical signal layout for the beta valve assembly shown in Figure 2 is illustrated in Figure 2A of the drawings. It is clearly noticeable from this how the position of the second signal generated relative to the beat signal, and/or two subsequent beat signals, varies along the length of the slots, and therefore the length of the beta tube 1.

Now, when the pitch of the aircraft propeller blade assembly, with which the beta valve assembly is associated, is altered, the beta tube 1 is moved relative to the magnetic pick up unit in a direction F or a direction G. Therefore, because of the nature of the relationship between the two slots 3, 4, the separation between the two slots is altered. In turn, this means the characteristics, relative to one another, of the detected signals is recorded, and can be analysed to provide the propeller blade pitch etc.

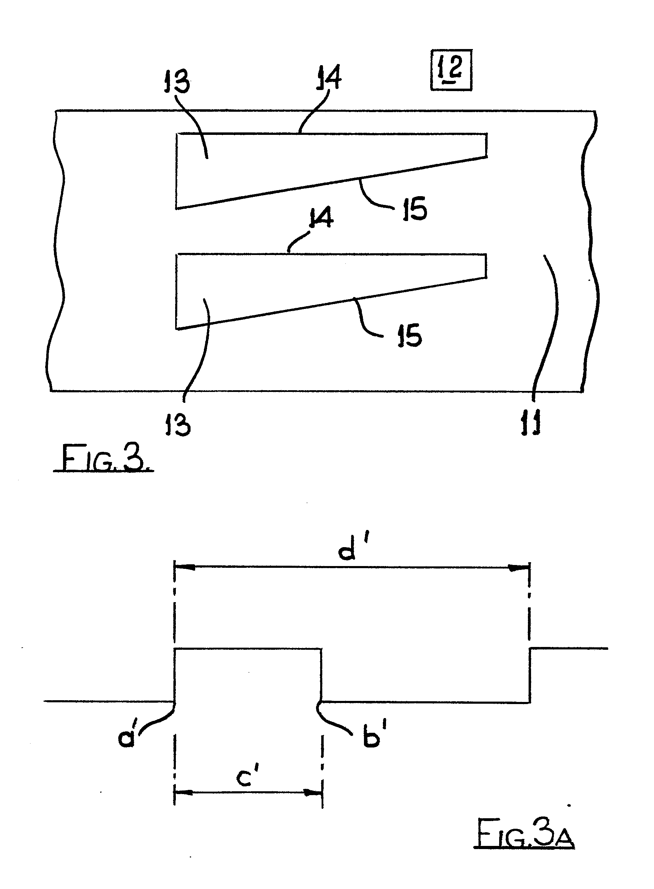

Now referring to Figure 3 of the drawings, a second embodiment of the invention suitable for use in a beta valve assembly (not shown), having a beta tube 11, and which may be incorporated in an aircraft propeller blade assembly, is illustrated. In this drawing the beta tube 11 is shown as if it had been longitudinally cut and rolled out flat.

A close proximity detector 12 is disposed relative to the beta tube 11 so that as the beta tube 11 rotates the close proximity detector 12 moves relative to two detectable sections 13 provided on the beta tube 11.

Each of the detectable sections 13 provided on the beta tube 11 comprises a single slot cut in the beta tube.

Each of the single slots has a regular beat signal provided by the leading edge 14, which edge runs is parallel to the axis of rotation of the beta tube, and a second signal provided by the second longitudinal edge 15.

The operation of the detector is essentially identical to that of the first embodiment of the invention, with the beta tube 11 being moved relative to the detector 12.

However, in this embodiment of the invention a close proximity detector is used, and therefore the shape, and form, of the wave form produced by the changes in signal level is different from the explained with reference to Figure 2.

The shape of the wave form produced is shown in Figure 3A of the drawings, the significant features of this are:

a' - change in signal level corresponding to the detector passing over a groove/slot leading edge,

b' - a change in signal level corresponding to the detector passing over a groove/slot trailing edge,

c' - duration of detector means travel over the slot/groove,

d' - duration between regular beat signals.

In the analysis of the data, the two groups of pulses generated by the two slots are analysed as separate pieces of data, and are treated independently of one another. However, the results obtained therefrom may be subsequently combined, in order to average the results obtained. In this way the effect of any machine tolerances etc. can be negated.

## Claims

1. An assembly for determining the longitudinal displacement of a rotating shaft, which incorporates a shaft displacement detector comprises:
- a detector means;
and - at least one detectable section provided in relation to the shaft, and which can be detected by the detector means;
wherein the detected property or properties of the detectable section vary dependent upon the longitudinal displacement of the shaft.

2. An assembly as claimed in claim 1, wherein the detector means is a close proximity detector.

3. An assembly as claimed in claim 1 or 2, wherein the or each of the detectable sections provided in relation to the shaft comprises two distinct sections.

4. An assembly as claimed in claim 3, wherein the first of the two distinct components provides a regular signal, and is formed parallel to the axis of rotation of the shaft.

5. An assembly as claimed in claim 4, wherein the second of the two distinct components provides a second signal, and is formed longitudinally sloped in relation to the first component along the length of the shaft, so that the separation between the regular beat signal and the second signal varies dependent upon the longitudinal displacement of the shaft.

6. An assembly as claimed in any one of the preceding claims, wherein the detectable sections comprise grooves or slots cut into the surface of, or through, the shaft.

7. An assembly as claimed in claim 5, wherein the first component comprises a longitudinal extending slot or groove cut into, or through, the shaft and running parallel to the axis of rotation thereof, and the second component comprises a second groove or slot cut into, or through, the shaft and running in longitudinal sloped relationship to to the first component.

8. An assembly as claimed in claim 6, wherein a single slot is cut into, or through, the shaft, the slot has a first side which acts as the first component and a second side, longitudinally sloped relative to the first side, which acts as the second component.

9. A propeller blade assembly including a beta valve assembly which has a rotatable beta tube and which incorporates a displacement, and thereby propeller blade pitch, detector comprising:
- a detector means;
and - at least one detectable section provided in relation to the beta tul, , and which can be detected by the detector means;
wherein the detected property or properties of the detectable section vary dependent upon the pitch of the propeller blades.

10. A method of detecting the longitudinal displacement of a rotating shaft which method comprises:

- providing a detector means;
- providing the shaft with detectable sections which can be detected by the detector means, and which have a first component and a second component which vary relative to one another dependent upon the longitudinal displacement;
- detecting the first component and the second component;

and - analysing the data obtained to ascertain the longitudinal displacement of the shaft.

11. A method for use in conjunction with a propeller blade assembly having a rotating beta tube, the method comprises:

- providing a detector means;
- providing the beta tube of the beta valve assembly with detectable sections which can be detected by the detector means, and which vary relative to one another dependent upon the propeller blade pitch;
- detecting the first component and the second component;

and - analysing the data obtained to ascertain the propeller blade pitch.

Fig.1.

EP 0 353 076 A2

Fig.2

Fig.2A

Fig. 3.

Fig.3A